**Europäisches Patentamt**

**European Patent Office**

**Office européen des brevets**

(11) Publication number: **0 210 400**
**B1**

(12) **EUROPEAN PATENT SPECIFICATION**

(45) Date of publication of patent specification: **02.05.90**

(21) Application number: **86108218.8**

(22) Date of filing: **16.06.86**

(51) Int. Cl.⁵: **G 11 B 5/54**

(54) Magnetic head supporting mechanism for a double surface type flexible disk.

(30) Priority: **23.07.85 JP 162342/85**

(43) Date of publication of application:
**04.02.87 Bulletin 87/06**

(45) Publication of the grant of the patent:
**02.05.90 Bulletin 90/18**

(84) Designated Contracting States:
**DE FR GB**

(56) References cited:
**EP-A-0 049 943**
**GB-A-2 000 893**
**US-A-3 772 666**
**US-A-4 197 566**
**US-A-4 379 316**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Hayashi, Toshikazu**
**2-3, Marunouchi 2-chome Chiyoda-ku**
**Tokyo (JP)**
Inventor: **Kumakura, Takeshi**
**2-3, Marunouchi 2-chome Chiyoda-ku**
**Tokyo (JP)**
Inventor: **Koike, Kazuo**
**2-3, Marunouchi 2-chome Chiyoda-ku**
**Tokyo (JP)**
Inventor: **Abe, Goro**
**2-3, Marunouchi 2-chome Chiyoda-ku**
**Tokyo (JP)**

(74) Representative: **Liesegang, Roland, Dr.-Ing.**
**FORRESTER & BOEHMERT Widenmayerstrasse**
**4 Postfach 22 01 37**
**D-8000 München 22 (DE)**

## Description

The present invention relates to a magnetic head supporting mechanism for a double surface type flexible disk according to the first part of Claim 1 (US—A—4379316). The flexible supporting means in this case provides for pivoting about perpendicular axes. In a magnetic head supporting means as known from GB—A—2000 893 the flexible supporting means are formed by leaf springs which provide for a degree of freedom in the vertical direction by pivoting about one horizontal axis.

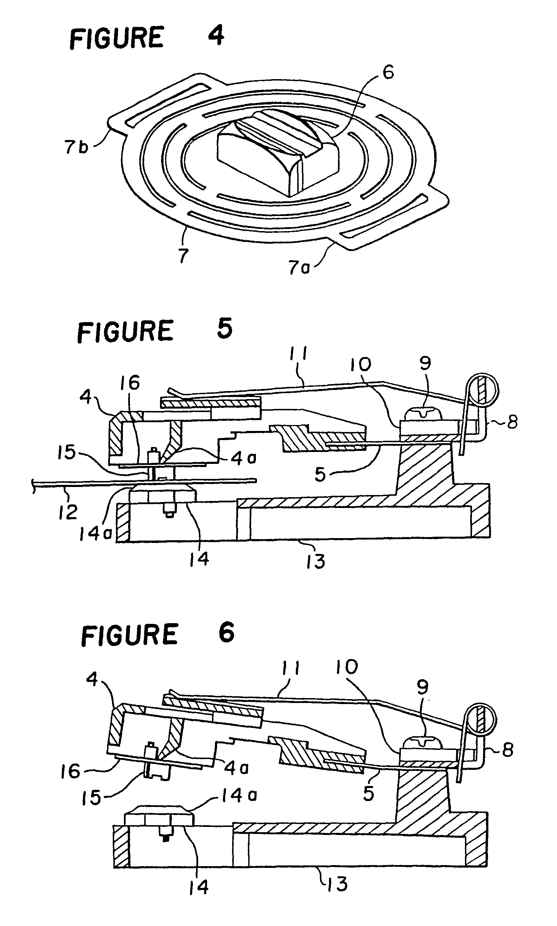

Figure 5 is a schematic cross-sectional view showing a conventional magnetic W type flexible head supporting mechanism for a double surface disk as disclosed in, for example, Japanese Unexamined Patent Publication No. 15866/1983. In the Figure, a carriage 13 is arranged so as to be movable in and along a guide lot (not shown) in the radial direction of a flexible disk 12. The carriage has a first magnetic head slider 14 bonded to its one end. The carriage also has an arm 4 coupled to the other end so as to be pivotable on a leaf spring 5. The arm 4 has a second magnetic head slider 15 mounted thereon by means of a gimbal spring 16. The arm 4 is coupled to the carriage 13 through the leaf spring which is inserted at its one end into the arm by a molding technique and which is fixed at its other end on the carriage 13 by means of a subframe 8, a screw 9 and a pressing plate. The arm 4 that is pivotable on the leaf spring 5 is urged in the direction toward the first magnetic head slider 14 by a torsional spring 11 extending from an end of the subframe 8. The second magnetic head slider 15 is mounted on the portion of the free end of the arm 4 opposing the first magnetic head slider 14. In addition, there is a control tab (not shown) on the arm adjacent to its free end. When the disk is inserted into the device, the control tab comes in engagement with a head load solenoid operated element (not shown) to automatically pivot the arm 4. As a result, the second magnetic head slider 15 is moved away from the first magnetic head slider 14 as shown in Figure 6 whereby the flexible disk can be inserted.

The first magnetic head slider 14 comprises a read/write head core, erase cores and ceramic members. The first magnetic head slider has a portion in contact with the flexible disk 12, which comprises a flat surface and an annular rim 14a thereabout. The flat surface and the annular rim 14a are connected to each other through a smooth curved surface to prevent the disk 12 from being damaged.

The second magnetic head slider 15 comprises a read/write head core, erase cores and ceramic members like the first slider 14. The second magnetic head slider is in a rectangular form and is shaped flat at its portion in contact with the disk 12. The second magnetic head slider has a groove for avoiding overfloating of the flexible disk at its central portion. In addition, the second magnetic head slider 15 is bonded on the thin gimbal spring 16, ends of which are in turn bonded on the arm 4. The gimbal spring is made of a spring material, and has such degree of freedom that it can flex easily in every direction.

A tapered pivotal member 4a extends to the back side of the gimbal spring 16 of the second magnetic head slider 15 mounted on the arm 4. The pivotal member 4a is at its leading edge in contact with the central point of the back side of the second magnetic head slider 15 so that the latter can tilt in the circumferential and radial directions of the flexible disk 12 about the leading edge of the pivotal member 4a.

The head cores of the first and second magnetic head sliders 14, 15 are respectively on an outer position and an inner position in the radial direction of the disk with respect to a sensor for both sliders, while the head core of the second magnetic head slider occupies the inner position.

In operation, when the flexible disk 12 has not been inserted, the arm 4, is raised by the solenoid operated element (not shown) as shown in Figure 6.

At the read/write operations, the flexible disk 12 is inserted and the solenoid operated element is de-energized. As a result, the arm 4 is urged toward the flexible disk 12 by the action of the torsional spring 11. The second magnetic head slider 15 presses the first magnetic head slider 14 through the disk 12. The pressing force is determined by the spring force of the torsional spring 11 because the pressing force directly acts on the central portion of the back side of the second magnetic head slider, using as a load point the pivotal member 4a provided on the arm.

When the flexible disk is rotated, its surfaces deflect vertically because of the inherent wavy motion and the vibrational wave. However, since the surface of the fixed first magnetic head slider 14 facing the disk 12 is positioned to penetrate the nominal running plane of the disk, the wavy motion of the disk 12 is corrected and the disk follows the surface of the first magnetic head slider 14. Whereas, the second magnetic head slider 15 also follows the surface of the flexible disk 12 corrected by the surface of the first magnetic head slider 14 because the second magnetic head slider 15 is pressed toward the first magnetic head slider 14 through the disk 12, using the pivotal member 4a as the load point, in a state of the second magnetic head slider closely sliding on the surface of the disk. The second magnetic head slider is supported by the planar position keeping function of the gimbal spring 16 having a small spring constant.

The stage from the state with the arm 4 raised as shown in Figure 6 to the state with the read/write operation done as shown in Figure 5, and the stage from the latter to the former (These stages are called "tapping stage") are respectively referred to as the loading stage and the unloading stage hereinbelow. In the loading stage, the arm 4 is released from the solenoid operated member to be lowered by the action of the torsional spring 11, so that the first and second magnetic head sliders 14, 15 collide with each other through the disk 12. On the other hand, in the unloading stage, the arm is lifted up by the solenoid operated element, being accompanied with the lifting of the second magnetic head slider 15. In the lifting movement of the arm 4, a transitional overshoot often occurs, so that the second magnetic head slider 15 mounted on the gimbal spring 16 of a small spring constant continues to vibrate and comes in contact with the first magnetic head slider 14 through the disk 12 again because of the continued transitional phenomenon in only the second magnetic head slider 15 even if the arm 4 occupies its raised position.

In the conventional magnetic head supporting mechanism for a double surface type flexible disk, prepared as mentioned above, correcting a slow and big wavy motion occurred in the disk 12 at the read/write operation is done by the first magnetic head slider 14, and the second magnetic head slider 15 follows the surface of the disk 12 corrected as described above. However, correcting a rapid and small wavy motion occurred in the disk 12 requires to press the disk 12 against the first magnetic head slider 15 by great force. By this arrangement, the pressing force by the magnetic head slider is so great that the disk is worn by its sliding contact with the magnetic head sliders to shorten its life.

On the other hand, since the head core of the second magnetic head slider 15 lies at an inner position in comparison with that of the first magnetic head slider 14 in the radial direction of the disk, the second magnetic head slider 15 has a higher recording density to the disk than the first magnetic head slider. This penalizes the second magnetic head slider 15 in terms of error rate characteristic, especially, at the side of its inner circumference. In addition, the second magnetic head slider 15 carries out its following motion on the basis of the first magnetic head slider 14 and the second magnetic head slider 15 supported by the gimbal spring 16 having a small spring constant is more sensible to the wave of the disk 12 than the first magnetic head slider. As a result, the second magnetic head slider 15 is inferior to the first magnetic head slider 14 in terms of its contact with the disk 12 besides error rate characteristic.

At the loading and unloading stage, there is a problem that the first and second magnetic head sliders 14, 15 collide with each other through the disk 12 to damage it by striking force.

It is an object of the present invention to eliminate the disadvantage of the conventional mechanism and to provide a magnetic head supporting mechanism for a double surface type flexible disk capable of minimizing wearing of the disk due to its sliding contact with the magnetic head slider to prolong its life, remarkably reducing the damage of the disk in the tapping stage and improving the read/write characteristic of the second magnetic head slider as an upper magnetic head.

The foregoing object of the present invention is accomplished by the features of claim 1.

In the drawings:

Figure 1 is a schematic cross-sectional view showing an embodiment of the magnetic head supporting mechanism according to the present invention in the read/write stage;

Figure 2 is a schematic cross-sectional view showing the embodiment of Figure 1 with the arm being raised;

Figures 3 and 4 are perspective views showing a first magnetic head slider and a second magnetic head slider in the embodiment of Figure 1, respectively;

Figure 5 is a schematic cross-sectional view showing the conventional mechanism in the read/write stage; and

Figure 6 is a schematic cross-sectional view showing the conventional mechanism with the arm being raised.

Now, the present invention will be described in detail with reference to a preferred embodiment illustrated in the accompanying drawings.

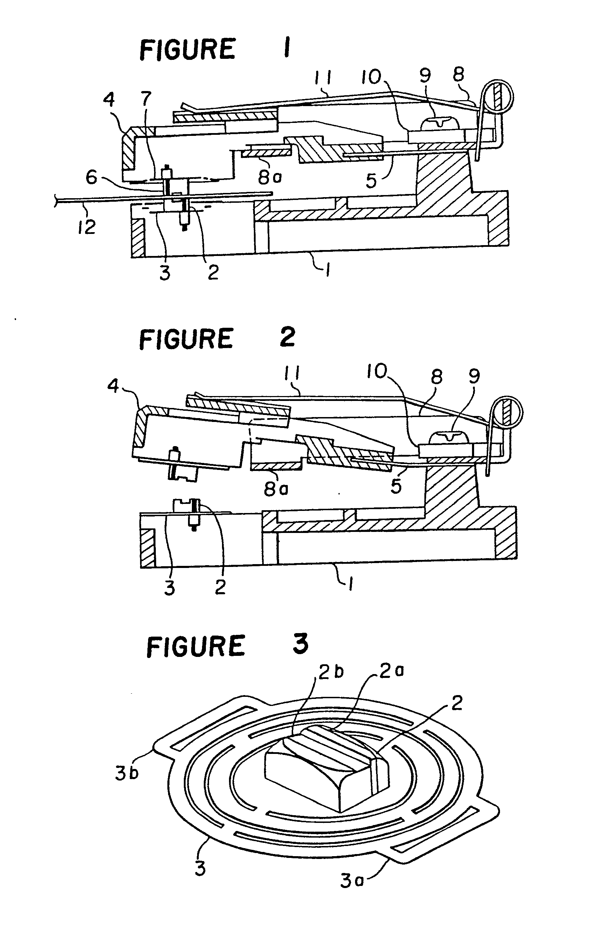

Referring to Figure 1, a carriage 1 is arranged so as to be movable in the radial direction of a flexible disk 12 in and along a guide slot (not shown). A first magnetic head slider 2 is bonded on a gimbal spring 3 to be mounted to the carriage 1 by means of the gimbal spring 3. The carriage 1 has an arm 4 coupled thereto so as to be pivotable on a leaf spring 5. A second magnetic head slider 6 is bonded on a gimbal spring 7. The arm 4 is coupled to an end of the carriage 1 through the leaf spring 5 which is inserted at its one end into the arm by a molding technique and which is fixed at its other end on the carriage 1 by means of a subframe 8, a screw 9 and a pressing plate 10. The arm which is pivotable on the leaf spring 5 is urged toward the first magnetic head slider 2 by a torsional spring 11 extending from an end of the subframe 8.

There is provided a stopper 8a formed at the free end of the subframe 8 for restricting the movement of the arm 4 in the direction toward the first magnetic head slider 2. The position of the arm 4 at the read/write stage is defined by engaging the arm with the stopper. On the free end of the arm 4, the second magnetic head slider 6 is mounted by means of the gimbal spring 7 so as to confront the first slider 2.

In addition, there is provided a control tab (not shown) on the arm adjacent its free end so as to be engageable with a head load solenoid operated element (not shown). At the time of inserting the disk 12, the solenoid operated element automatically lifts the arm as shown in Figure 2 to move the second magnetic head slider 6 away from the first magnetic head slider 2, so that the disk can be inserted in the mechanism.

Referring to Figure 3 wherein the first magnetic head slider 2 and the gimbal spring 3 are shown, the first magnetic head slider 2 may comprise a head core 2a for reading or writing data, erase cores and ceramic members. The first magnetic head slider has a flat top portion which comes in touch with the disk 12 and a groove 2b in the central portion of the top portion for preventing the disk from overfloating. The top surface of the first magnetic head slide has its corners chamfered and smoothly curved to prevent the disk 12 from being damaged. The first magnetic head slider 2 is bonded on the thin gimbal spring 3 which is made of a spring material, is easily flexible in the vertical, circumferential and radial direction of the disk 12 and has a treble annular struction with good flexibility. The gimbal spring 3 is bonded at its ends 3a, 3b on the carriage 1.

Referring to Figure 4 wherein the second magnetic head slider 6 and the gimbal spring 7 are shown. The second magnetic head slider 6 and the gimbal spring 7 have respectively the same shapes as the first magnetic head slider 2 and the gimbal spring 3. The gimbal spring 7 is bonded at its ends 7a, 7b on the arm 4.

In the embodiment, the first magnetic head slider 2 and the second magnetic head slider 6 act respectively as a lower magnetic head and an upper magnetic head in the double surface type flexible disk drive mechanism. The head core 2a of the first magnetic head slider 2 occupies an outer position in comparison with that of the second magnetic head slider 6 in the radial direction of the disk 12. When the disk 12 is not inserted in the mechanism, the arm 4 is raised by the head load solenoid operated element (not shown). In the read/write stage, the disk 12 is inserted as shown in Figure 1, and the arm 4 is released from the de-energized head load solenoid operated element and is to pushed the arm 4 toward the disk 12 by the action of the torsional spring 11. The second magnetic head slider 6 presses the first magnetic head slider 2 through the disk 12.

The spring force of the torsional spring 11 is set at a value (e.g. about 40g) much greater than the force given to the second magnetic head slider 6 by the disk 12 and the first magnetic head slider 2, so that the torsional spring 11 and the stopper 8a provided on the subframe 8 can maintain the arm 4 at a position vertically predetermined with respect to the medium surface of the disk in the read/write stage. The pressing force given to the disk 12 by both magnetic head sliders 2, 6, which is caused by the deflection of the gimbal spring 3, 7 for the magnetic head sliders 2, 3 is about 12 g. The deflection quantity of each gimbal spring 3 or 7 in the direction perpendicular to the surfaces of the disk 12 is the same as each other. The first and second magnetic head sliders 2, 6 are pressed by each other to come to a standstill at a balance point on the basis of the action and reaction principle.

When the disk is rotated at the balance point of the first and second magnetic head sliders 2, 6, the surfaces of the disk move up and down due to the inherent wavy motion and the vibrational wave. At this time, the first and second magnetic head sliders 2, 6 follow the vertical vibration of the flexible disk 12 to maintain good contact therewith since they are respectively fixed on the gimbal springs 3, 7 having the same spring constant and are balanced each other on the basis of the action and reaction principle.

At the loading stage, the arm 4 is released from the head load solenoid operated element to be lowered by the action of the torsional spring 11. As a result, the first magnetic head slider 2 and the second magnetic head slider 6 collide with each other through the disk 12. At this moment, the gimbal springs 3, 7 for both slider 2, 6 flexes to moderate the shock caused by the collision. In addition, since the lowering movement of the arm 4 is restricted by the stopper 8a of the subframe 8, excessive force is not given to both sliders 2, 6 and the disk 12.

At the unloading stage, the arm 4 is lifted up by the head load solenoid element, accompanied by the lifting of the second magnetic head slider 6. The collision between the first magnetic head slider and the second magnetic head slider caused by the lifting movement of the latter as reaction can be moderated like at the loading stage.

In the above-mentioned embodiment, the gimbal spring 3 for the first magnetic head slider 2 has the same shape as the gimbal spring 7 for the second magnetic head slider 6. Both gimbal springs 3, 7 may have different shapes and be made of spring materials having different thicknesses or different materials while maintaining the same spring constant. The shape of the gimbal spring is not limited to the one as shown since if it has a gimbal structure having such degree of freedom that it can flex in every direction, the same effect as the embodiment can be obtained.

In the embodiment, the stopper 8a provided on the subframe 8 serves to maintain the arm 4 at a predetermined lowest position at the read/write stage. The stopper 8a may be provided on the carriage 1 at a position that it does not interfere with the disk 12, without provision of the subframe 8.

As described above, in accordance with the present invention, the first and second magnetic head sliders 2, 6 are supported only by gimbal springs 3, 7, respectively, the spring constant of each gimbal spring is set at the same value, and there is provided the stopper 8a for restricting the lowering movement of the arm 4. As a result, the mechanism according to the present invention is good at following the disk 12. In addition, the pressing force by the magnetic head can be minimized to prolong the life of the disk in terms of its sliding movement and remarkably reduce the possibility of giving damage to the disk at the tapping stage, which serves to improve the error rate characteristic at the read/write stage.

## Claims

1. A magnetic head supporting mechanism for a double surface type flexible disk (12), comprising a carriage (1),
   a first flexible supporting means (3) having more than one degree of freedom with respect to the surfaces of the disk (12),

a first magnetic head slider (2) mounted on the carriage (1) by means of the first flexible supporting means (3),

an arm (4) pivotably coupled to the carriage so that the disk (12) can be inserted or removed,

a second flexible supporting means (7) having more than one degree of freedom with respect to the surfaces of the disk (12) and the same spring constant as that of the first flexible supporting means (3), said first and second flexible supporting means being formed as gimbal springs, and a second magnetic head slider (6) mounted on the arm (4) by means of the second flexible supporting means (7), characterized in that said first and second gimbal springs (3, 7) both are fixed by means of opposed connecting portions (3a, 3b) to the carriage such that they can flex easily in any direction and thereby have a degree of freedom in the vertical direction with respect to the surfaces of the disk (12) to thereby allow for follow-up motion of said head-sliders (2, 6) at wavy motion of said disk (12).

2. The mechanism according to claim 1, characterized in that a stopper (8a) is provided for restricting the movement of the arm (4) to maintain it at a predetermined position in the read/write stage.

## Patentansprüche

1. Magnetkopfstützeinrichtung für eine flexible Platte (12) mit Aufzeichnungsflächen auf beiden Seiten mit einem Träger (1),

einer ersten flexiblen Stützvorrichtung (3) mit mehr als einem Freiheitsgrad bezüglich den Oberflächen der Platte (12),

einem ersten Magnetkopfgleiter (2), der am Träger (1) mittels der ersten flexiblen Stützvorrichtung (3) montiert ist, wobei ein Arm (4) schwenkbar am Träger gelagert ist, so daß die Platte (12) eingesetzt und entfernt werden kann,

einer zweiten flexiblen Stützvorrichtung (7) mit mehr als einem Freiheitsgrad bezüglich den Oberflächen der Platte (12) und gleicher Federkonstante wie die erste flexible Stützvorrichtung (3), wobei die erste und die zweite Stützvorrichtung als kardanisch wirkende Blattfedern ausgebildet sind, und

einem zweiten Magnetkopfgleiter (6), der an dem Arm (4) mittels der zweiten flexiblen Stützvorrichtung (7) angebracht ist, dadurch gekennzeichnet, daß die Blattfedern (3, 7) beide einen Freiheitsgrad in Richtung senkrecht bezüglich der Oberflächen der Platte (12) haben, um dadurch eine Nachführbewegung der Kopfgleiter (2, 6) bei Wellenbewegung der Platte (12) zu ermöglichen.

2. Einrichtung nach Anspruch 1, dadurch gekennzeichnet, daß ein Anschlag (8a) zum Begrenzen der Bewegung des Arms (4) vorgesehen ist, um ihn in Lese-/Schreibstellung in vorbestimmter Position zu halten.

## Revendications

1. Mécanisme de support de têtes magnétiques pour un disque souple (12) du type double surface, comprenant un chariot (1),

un premier moyen souple de support (3) comportant plus d'un degré de liberté par rapport aux surfaces du disque (12),

un premier coulisseau (2) de support d'une tête magnétique, monté sur le chariot (1) à l'aide du premier moyen souple de support (3),

un bras (4) accouplé, de manière à pouvoir pivoter, au chariot de sorte que le disque (12) peut être inséré ou retiré,

un second moyen souple de support (7) comportant plus d'un degré de liberté par rapport aux surfaces du disque (12) et possédant la même constante d'élasticité que celle du premier moyen souple de support (3), lesdits premier et second moyens de support étant réalisés sous la forme de ressorts montés à la cardan, et

un second coulisseau (6) de support d'une tête magnétique, monté sur le bras (4) à l'aide du second moyen souple de support (7),

caractérisé en ce que les premier et second ressorts montés à la cardan (3, 7) sont tous deux fixés au moyen de parties opposées de raccordement (3a, 3b) au chariot de sorte qu'ils peuvent aisément fléchir dans n'importe quelle direction et possèdent, de ce fait, un degré de liberté dans la direction verticale par rapport aux surfaces du disque (12) en permettant un mouvement de suivi desdits coulisseaux (2, 6) de support de têtes magnétiques dans le cas d'un mouvement ondulé dudit disque (12).

2. Mécanisme selon la revendication 1, caractérisé en ce qu'il est prévu une butée (8a) servant à limiter le déplacement du bras (4) de manière à le maintenir dans une position prédéterminée lors de l'étape de lecture/enregistrement.

# FIGURE 1

# FIGURE 2

# FIGURE 3

FIGURE 4

FIGURE 5

FIGURE 6